# EUROPÄISCHE PATENTSCHRIFT

(11) **EP 3 363 091 B1**
(45) Veröffentlichungstag und Bekanntmachung des Hinweises auf die Patenterteilung: **05.05.2021**
(21) Anmeldenummer: 15813011.2
(22) Anmeldetag: 14.12.2015
(51) Int. Cl.: H02J 3/26, H02J 3/18

(54) **VORRICHTUNG UND VERFAHREN ZUM STEUERN EINES LASTFLUSSES IN EINEM WECHSELSPANNUNGSNETZ**
DEVICE AND METHOD FOR CONTROLLING A LOAD FLOW IN AN ALTERNATING-VOLTAGE NETWORK
DISPOSITIF ET PROCÉDÉ POUR COMMANDER UN FLUX DE CHARGE DANS UN RÉSEAU À TENSION ALTERNATIVE

(43) Veröffentlichungstag der Anmeldung: 22.08.2018
(73) Patentinhaber: Siemens Energy Global GmbH & Co. KG, 81739 München (DE)
(72) Erfinder: AUGSBURGER, Friedemann, 90518 Altdorf (DE); ERGIN, Dominik, 91083 Baiersdorf (DE); KNAAK, Hans-Joachim, 91054 Erlangen (DE); PHILIPP, Andreas, 90610 Winkelhaid (DE); SCHÄFER, Jochen, 91301 Kersbach (DE)
(86) Internationale Anmeldenummer: PCT/EP2015/079546
(87) Internationale Veröffentlichungsnummer: WO 2017/101963

(56) Entgegenhaltungen:
- WO-A1-2013/189525
- WO-A1-2013/189526
- WO-A1-2014/127829
- WO-A1-2015/003737
- FR-A1- 2 232 857

## Beschreibung

Die Erfindung betrifft eine Vorrichtung zum Steuern eines Lastflusses in einem Wechselspannungsnetz.

In einem Wechselspannungsnetz, insbesondere einem verzweigten oder einem vermaschten Wechselspannungsnetz, ist es oft erforderlich den Lastfluss derart einzustellen, dass sich ein im Wechselspannungsnetz fließender Betriebsstrom möglichst gleichmäßig auf parallele Leitungen des Wechselspannungsnetzes verteilt. Dies ist insbesondere durch die quadratische Abhängigkeit der ohmschen Verluste vom Strom begründet, wodurch auch der Wirkungsgrad der Energieübertragung maßgeblich beeinflusst ist. Zudem müssen in Wechselspannungsnetzen die Blindleistungserzeugung und der Blindleistungsverbruch kontrolliert werden. Im Rahmen der steigenden zu übertragenden Energiemengen aufgrund der verstärkten Nutzung regenerativer Energiequellen bekommt die optimale Auslastung der vorhandenen Wechselspannungsnetze eine deutlich gewachsene Bedeutung.

Vorrichtungen zum Steuern des Lastflusses sind insbesondere als Blindleistungskompensationsanlagen aus dem Stand der Technik bekannt. Beispielsweise werden bei der sogenannten Fixed Series Compensation (FSC) seriell in eine Wechselspannungsleitung des Wechselspannungsnetzes eigefügte Kondensatoren verwendet.

Ferner sind statische Blindleistungskompensatoren bekannt, die parallel zur Wechselspannungsleitung angeordnete Umrichter umfassen. Beispielsweise zeigt die Druckschrift WO 2013/087110 A1 einen Umrichter mit drei Phasenzweigen, die in einer Dreiecksschaltung miteinander verbunden sind. Jeder Phasenzweig weist einen Anschlusspunkt zum Anschluss an eine ihm zugeordnete Phase eines dreiphasigen Wechselspannungsnetzes auf. Dabei sind die Phasenzweige jeweils über Koppelinduktivitäten mit den zugeordneten Phasen des Wechselspannungsnetzes verbunden. Jeder Phasenzweig weist ein Phasenmodul mit einer Reihenschaltung von zweipoligen Submodulen auf, wobei die Submodule als sogenannte Vollbrückenschaltungen ausgebildet sind. Jedes Submodul umfasst demnach zwei zueinander parallel geschaltete Reihenschaltungen von Leistungshalbleiterschalteinheiten, wobei jede Leistungshalbleiterschalteinheit einen ausschaltbaren Leistungshalbleiter sowie eine dazu antiparallele Diode umfasst. Ferner weist jedes Submodul einen zu den beiden Reihenschaltungen parallel geschalteten Energiespeicher in Form eines Kondensators auf. Jedes Submodul kann derart angesteuert werden, dass an dessen Polen eine Spannung abfällt, die entweder einer Energiespeicherspannung, also der Spannung des Kondensators, der Energiespeicherspannung jedoch mit umgekehrter Polarität oder einer Nullspannung, also einer Spannung mit dem Wert null, entspricht. Damit kann mittels geeigneter Ansteuerung der Submodule eine stufenförmige Wechselspannung an den Phasenmodulen des Umrichters erzeugt werden. Die einzelne Stufenhöhe entspricht dabei der Kondensatorspannung. Ferner umfasst der bekannte Umrichter eine Regelungseinrichtung zur Regelung der Ströme in den Phasenzweigen des Umrichters, so dass eine gewünschte induktive Blindleistung im Wechselspannungsnetz bereitgestellt werden kann.

Die Aufgabe der Erfindung ist es, eine Vorrichtung der eingangs genannten Art vorzuschlagen, die eine möglichst schnelle und zuverlässige Lastflusssteuerung im Wechselspannungsnetz erlaubt.

Die Aufgabe wird durch die Vorrichtung nach Anspruch 1 sowie das Verfahren nach Anspruch 12 gelöst.

Die Aufgabe wird bei einer artgemäßen Vorrichtung durch eine seriell in eine Phasenleitung des Wechselspannungsnetzes einfügbare Modulreihenschaltung zweipoliger Schaltmodule gelöst, wobei jedes Schaltmodul einen Energiespeicher sowie ansteuerbare, ein- und abschaltbare Leistungshalbleiter aufweist und derart ansteuerbar ist, dass an dessen Polen eine Schaltmodulspannung erzeugbar ist, die einer positiven oder negativen Energiespeicherspannung oder einer Spannung mit dem Wert null entspricht, und einer Steuereinrichtung zum Ansteuern der Schaltmodule, die dazu eingerichtet ist, die Schaltmodule derart anzusteuern, dass an der Modulreihenschaltung eine periodische Längsspannung erzeugbar ist.

Unter einer Längsspannung kann eine Spannung verstanden werden, die entlang einer Stromleitung oder entlang eines Abschnitts einer Stromleitung anliegt. Insbesondere kann eine Längsspannung eine Spannung zwischen zwei Anschlüssen der Modulreihenschaltung sein. Die Modulreihenschaltung ist dabei zweipolig ausgebildet, so dass der gesamte in der Phasenleitung fließende Phasenstrom auch über die erfindungsgemäße Vorrichtung fließt.

Mit der erfindungsgemäßen Vorrichtung ist eine schnelle und im Wesentlichen kontinuierlich einstellbare Längsspannungsquelle für ein Wechselspannungsnetz bereitgestellt. Da im Vergleich zu einer Parallelkompensation seriell lediglich relativ kleine Spannungen in das Wechselspannungsnetz eingespeist werden müssen, um den Lastfluss effektiv zu beeinflussen, kann vorteilhaft eine Kostensenkung der Lastflusssteuerung erreicht werden.

Darüber hinaus können vorteilhaft neben einer Grundschwingung auch Oberschwingungen der Spannung bzw. des Stromes mittels der erfindungsgemäßen Vorrichtung beeinflusst werden. Damit können auftretende Instabilitäten schnell bedämpft werden. Zudem kann Energie aus bestimmten Oberschwingungen oder transienten Vorgängen im Wechselspannungsnetz entnommen werden und mit einer anderen, unkritischen Frequenz wieder in das Wechselspannungsnetz eingespeist werden.

Mittels der erfindungsgemäßen Vorrichtung kann eine Längsspannung einer vorbestimmten Frequenz und Phase erzeugt werden. Dabei wird die Energie aus dem Wechselspannungsnetz in den Energiespeichern der Schaltmodule zwischengespeichert. Daher kann die Vorrichtung zunächst Blindleistung in das Wechselspannungsnetz einspeisen, wobei eine kurzfristige Wirkleistungseinspeisung ebenfalls möglich ist.

Zur Erzeugung der periodischen Längsspannung steuert die Steuereinrichtung die Schaltmodule bzw. die Leistungshalbleiter der Schaltmodule beispielsweise in der Weise an, dass in einer vorgegebenen zeitlichen Reihenfolge eine Polarität der Schaltmodulspannung wechselt. Da alle Leistungshalbleiter aller Schaltmodule prinzipiell unabhängig voneinander schaltbar sind, kann somit eine Längsspannung beliebiger Phase und Frequenz erzeugt werden.

Die zur wirksamen Beeinflussung des Lastflusses einzuprägende Längsspannung ist relativ gering, verglichen mit einer Querspannung, die mittels parallel angeschlossener Anlagen eingespeist werden muss. Beispielsweise können Längsspannungen von 1 kV bis 50 kV bei einer Übertragungsspannung von über 100 kV im Wechselspannungsnetz bereits ausreichend sein.

Bei einem mehrphasigen Wechselspannungsnetz ist bevorzugt jede der Phasenleitungen mit einer ihr zugeordneten Modulreihenschaltung ausgestattet.

Eine Wirkleistungseinspeisung über eine längere Zeit kann erreicht werden, wenn eine Energieübertragung zwischen einer Mehrzahl der Modulreihenschaltungen ermöglicht wird. Gemäß einer bevorzugten Ausführungsform der Erfindung umfasst die Vorrichtung ferner eine weitere Modulreihenschaltung der zweipoligen Schaltmodule, die in eine mit der Phasenleitung verbundene Abgangsleitung des Wechselspannungsnetzes einfügbar und mittels der eine Längsspannung erzeugbar ist, sowie eine mit der Modulreihenschaltung und mit der weiteren Modulreihenschaltung verbundende Energieaustauschvorrichtung, die zum Austausch elektrischer Energie zwischen der Phasenleitung und der Abgangsleitung eingerichtet ist. Dementsprechend kann in einem Knoten des Wechselspannungsnetzes die Energie zwischen dessen Knotenzweigen, nämlich der Phasenleitung und wenigstens einem weiteren Knotenzweig, der auch als Abgangsleitung bezeichnet wird, ausgetauscht wird. Da sich die Phasenleitung und die Abgangsleitung im Wesentlichen auf gleichem elektrischen Potenzial befinden, ist ein Energieaustausch zwischen ihnen einfacher durchzuführen als beispielsweise ein Energieaustausch zwischen dem Wechselspannungsnetz und einer sich auf Erdpotenzial befindenden Energiequelle.

Es ist jedoch prinzipiell auch denkbar, wenn die Modulreihenschaltung einer ersten Phasenleitung und die weitere Modulreihenschaltung einer zweiten, einer weiteren Phase eines mehrphasigen Wechselspannungsnetzes zugeordneten Phasenleitung zugeordnet ist und mittels der Energieaustauschvorrichtung ein Energieaustausch zwischen der ersten und der zweiten Phasenleitung durchführbar ist.

Vorzugsweise umfasst die Energieaustauschvorrichtung einen ersten Wechselrichter, der gleichspannungsseitig mit dem Energiespeicher wenigstens eines der Schaltmodule der Modulreihenschaltung und wechselspannungsseitig mit einer Sammelschiene verbunden ist, und einen zweiten Wechselrichter, der gleichspannungsseitig mit dem Energiespeicher wenigstens eines der Schaltmodule der weiteren Modulreihenschaltung und wechselspannungsseitig mit der Sammelschiene verbunden ist. Die auszutauschende Energie wird demnach dem gleichspannungsseitigen Zwischenkreis des Schaltmoduls entnommen und dem gleichspannungsseitigen Zwischenkreis des Schaltmoduls der weiteren Modulreihenschaltung zugeführt. Es ist weiterhin denkbar, wenn mehrere oder auch alle Schaltmodule der Modulreihenschaltung und/oder der weiteren Modulreihenschaltung über ihnen zugeordnete Wechselrichter mit der Sammelschiene verbunden sind. Dies erlaubt eine besonders effiziente Energieübertragung zwischen den Modulreihenschaltungen.

Vorzugsweise sind der erste und der zweite Wechselrichter jeweils über einen Transformator mit der Sammelschiene verbunden. Dadurch ist vorteilhaft eine Potenzialtrennung zwischen den Schaltmodulen erreicht.

Gemäß einer Ausführungsform der Erfindung ist die Sammelschiene über einen zusätzlichen Transformator mit einem weiteren Wechselspannungsnetz verbunden. Auf diese Weise kann zusätzlich benötigte oder überschüssige Wirkleistung mit dem weiteren Wechselspannungsnetz ausgetauscht werden.

Gemäß einer weiteren Ausführungsform umfasst die Energieaustauschvorrichtung wenigstens einen Energieaustauschzweig, in dem eine Reihenschaltung zweipoliger Austauschmodule angeordnet ist, wobei jedes Austauschmodul einen Energiespeicher sowie ansteuerbare, ein- und abschaltbare Leistungshalbleiter aufweist und derart ansteuerbar ist, dass an dessen Polen eine Austauschmodulspannung erzeugbar ist, die einer positiven oder negativen Energiespeicherspannung oder einer Spannung mit dem Wert null entspricht. Über eine geeignete Ansteuerung der Leistungshalbleiter der Austauschmodule kann ein Energieaustausch zwischen den Modulreihenschaltungen bzw. der Phasenleitung und der Abgangsleitung erreicht werden. Dabei kann vorteilhaft auf eine Bereitstellung eines Transformators verzichtet werden.

Gemäß einer vorteilhaften Ausführungsform der Erfindung ist eine Mehrzahl zusätzlicher Modulreihenschaltungen der zweipoligen Schaltmodule vorgesehen, die jeweils in ihnen zugeordnete, mit der Phasenleitung verbundene zusätzliche Abgangsleitungen einfügbar sind, wobei die Energieaustauschvorrichtung mit den zusätzlichen Modulreihenschaltungen verbunden und zum Energieaustausch zwischen der Phasenleitung, der Abgangsleitung und den zusätzlichen Abgangsleitungen eingerichtet ist. Die Energieaustauschvorrichtung kann dabei mehrere Energieaustauschzweige aufweisen, die sich jeweils zwischen zwei Leitungen aus der Menge der Phasenleitung, der Abgangsleitung und der zusätzlichen Abgangsleitungen erstrecken und den Energieaustausch ermöglichen. Auf diese Weise kann eine Lastflusssteuerung in einem eine Mehrzahl von Abgangsleitungen aufweisenden Knoten des Wechselspannungsnetzes realisiert werden, wobei in einzelne Abgangsleitung bzw. die Phasenleitung auch Wirkleistung dauerhaft eingespeist werden kann.

Der Energieaustausch zwischen der Phasenleitung und den Abgangsleitungen kann mittels eines Kreisstromes realisiert werden, der in den Energieaustauschzweigen fließt.

Gemäß einer Ausführungsform der Erfindung bilden die Energieaustauschzweige zwischen der Phasenleitung und den Abgangsleitungen eine Ringstruktur und/oder eine Sternstruktur. Die Ringstruktur bzw. Sternstruktur kann mehrere Maschen umfassen, die von den Energieaustauschzweigen, einem Abschnitt der Phasenleitung und/oder Abschnitten der Abgangsleitungen gebildet sind. In diesen Maschen kann durch entsprechende Ansteuerung der Schaltmodule bzw. der Leistungshalbleiter der Schaltmodule wenigstens ein Kreisstrom erzeugt werden, so dass ein Energie- bzw. Wirkleistungsaustausch stattfindet.

Vorzugsweise ist die erfindungsgemäße Vorrichtung zum Steuern des Lastflusses in einem mehrphasigen, beispielsweise einem dreiphasigen Wechselspannungsnetz eingerichtet.

Es kann von Vorteil sein, wenn die die Schaltmodule als Vollbrückenschaltungen ausgebildet sind. Eine Vollbrückenschaltung ist beispielsweise in der WO 2013/087110 A1 beschrieben.

Es ist ebenfalls möglich, die Schaltmodule als zwei entgegengesetzt gerichtete Halbbrückenschaltungen auszubilden. Eine Halbbrückenschaltung ist beispielsweise aus der DE 10103031 B4 bekannt.

Es ist jedoch ebenfalls selbstverständlich denkbar, wenn die Modulreihenschaltung weitere zweipolige Elemente aufweist, die unter Ausbildung einer Reihenschaltung gemeinsam mit den Submodulen in die Phasenleitung bzw. die Abgangsleitungen geschaltet sind.

Die Erfindung betrifft ferner ein Verfahren zur Steuerung eines Lastflusses in einem Wechselspannungsnetz.

Die Aufgabe der Erfindung besteht darin, ein solches Verfahren anzugeben, das möglichst einfach durchzuführen und zuverlässig ist.

Die Aufgabe wird durch ein Verfahren gelöst, bei dem mittels einer Steuereinrichtung Schaltmodule einer Modulreihenschaltung, die in eine Phasenleitung des Wechselspannungsnetzes eingefügt ist, wobei jedes Schaltmodul einen Energiespeicher sowie ansteuerbare, ein- und abschaltbare Leistungshalbleiter aufweist und derart ansteuerbar ist, dass an dessen Polen eine Schaltmodulspannung erzeugbar ist, die einer positiven oder negativen Energiespeicherspannung oder einer Spannung mit dem Wert null entspricht, derart angesteuert werden, dass an der Modulreihenschaltung eine periodische Längsspannung erzeugt wird.

Die Vorteile des erfindungsgemäßen Verfahrens entsprechen den im Zusammenhang mit der erfindungsgemäßen Vorrichtung beschriebenen Vorteilen.

Gemäß einer Ausführungsform des Verfahrens werden mittels der Steuereinrichtung Schaltmodule einer weiteren Modulreihenschaltung, die in eine Abgangsleitung des Wechselspannungsnetzes eingefügt ist, derart angesteuert, dass an der weiteren Modulreihenschaltung eine Längsspannung erzeugt wird, wobei mittels einer mit den beiden Modulreihenschaltungen verbundenen Energieaustauschvorrichtung elektrische Energie zwischen der Phasenleitung und der Abgangsleitung ausgetauscht wird. Damit kann dauerhaft auch eine Wirkleistung in die Phasenleitung oder die Abgangsleitung eingespeist werden.

Die Erfindung soll ferner anhand von Ausführungsbeispielen in Figuren 2 bis 6 näher erläutert werden.
Figur 1 zeigt ein erstes Beispiel einer Vorrichtung in schematischer Darstellung;
Figur 2 zeigt ein zweites Ausführungsbeispiel der erfindungsgemäßen Vorrichtung in schematischer Darstellung;
Figur 3 zeigt ein drittes Ausführungsbeispiel der erfindungsgemäßen Vorrichtung in schematischer Darstellung;
Figur 4 zeigt ein viertes Ausführungsbeispiel der erfindungsgemäßen Vorrichtung in schematischer Darstellung;
Figur 5 zeigt ein fünftes Ausführungsbeispiel der erfindungsgemäßen Vorrichtung in schematischer Darstellung;
Figur 6 zeigt ein Ausführungsbeispiel eines Schaltmoduls der erfindungsgemäßen Vorrichtungen der Figuren 1 bis 5 in schematischer Darstellung.

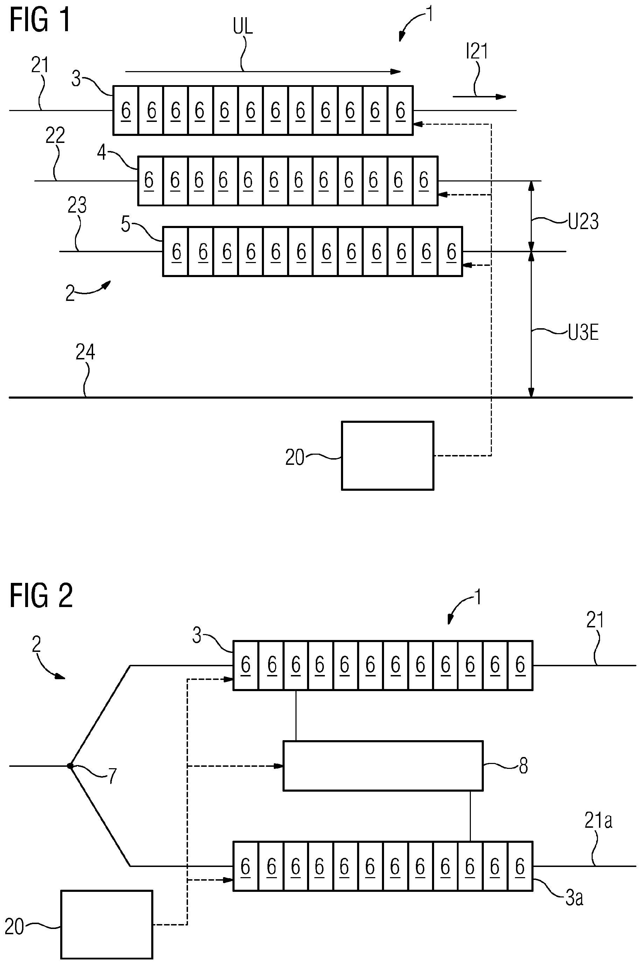

Im Einzelnen ist in Figur 1 ein Beispiel einer Vorrichtung 1 zum Steuern eines Lastflusses in einem Wechselspannungsnetz 2. Das Wechselspannungsnetz 2 umfasst eine erste, eine zweite und eine dritte Phasenleitung 21, 22, 23 sowie einen Erdleiter 24. Zwischen den Phasenleitungen 21, 22, 23 fallen Phasenspannungen von über 100 kV ab. Beispielsweise beträgt eine Phasenspannung U23 zwischen der zweiten Phasenleitung 22 und der dritten Phasenleitung 23 400 kV. Entsprechen fällt zwischen der dritten Phasenleitung 23 und dem Erdleiter 24 eine Differenzspannung U3E von ca. 230 kV ab. Alle Phasenspannungen sind im vorliegenden Fall Wechselgrößen.

Eine erste Modulreihenschaltung 3 ist in die erste Phasenleitung 21 seriell eingefügt. Die erste Modulreihenschaltung 3 ist hierbei zweipolig ausgebildet, so dass der gesamte Phasenstrom I21 auch über die Modulreihenschaltung 3 fließt.

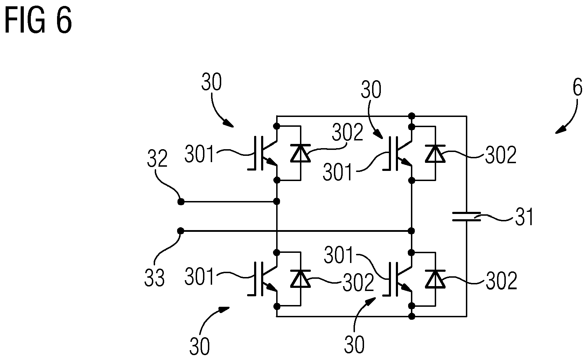

Die erste Modulreihenschaltung 3 umfasst eine Reihenschaltung zweipoliger Schaltmodule 6, die im vorliegenden Beispiel alle als Vollbrückenschaltungen ausgebildet sind. Auf den Aufbau der Schaltmodule 6 wird im Folgenden im Zusammenhang mit der Erläuterung der Figur 6 näher eingegangen.

Die Vorrichtung 1 umfasst ferner eine zweite Modulreihenschaltung 4, die in die zweite Phasenleitung 22 eingefügt ist und eine dritte Modulreihenschaltung 5, die in die dritte Phasenleitung 23 eingefügt ist. Der Aufbau der zweiten und dritten Modulreihenschaltung 4 bzw. 5 gleicht im vorliegenden Ausführungsbeispiel demjenigen der ersten Modulreihenschaltung 3.

Die Vorrichtung 1 umfasst darüber hinaus eine Steuereinrichtung 20, die dazu geeignet ist, die Leistungshalbleiterschalter der Schaltmodule 6 anzusteuern. Auf diese Weise kann eine Schaltmodulspannung an den Anschlüssen jedes Schaltmoduls 6 eingestellt werden. An der ersten Modulreihenschaltung 3 kann somit insgesamt eine Längsspannung UL eingestellt werden, die der Summe der Schaltmodulspannungen der einzelnen Schaltmodule entspricht. Es ist hierbei anzumerken, dass die erste Modulreihenschaltung 3 in der Darstellung der Figur 1 zwölf Schaltmodule 6 aufweist. Die Anzahl der Schaltmodule 6 ist jedoch grundsätzlich beliebig und kann an die jeweilige Anwendung angepasst sein.

Entsprechendes gilt auch für die zweite und die dritte Modulreihenschaltung 4 und 5.

Da die Schaltmodule 6 unabhängig voneinander angesteuert werden können, ist eine Längsspannung UL beliebiger Kurvenform einstellbar. Auf diese Weise können sehr schnell veränderliche induktive und/oder kapazitive Spannungen zur direkten Beeinflussung des Lastflusses in das Wechselspannungsnetz 2 eingespeist werden. Dies ist insbesondere auch in Reihenschaltung mit Transformatoren im Netz und an Abgängen von Schaltanlagen möglich.

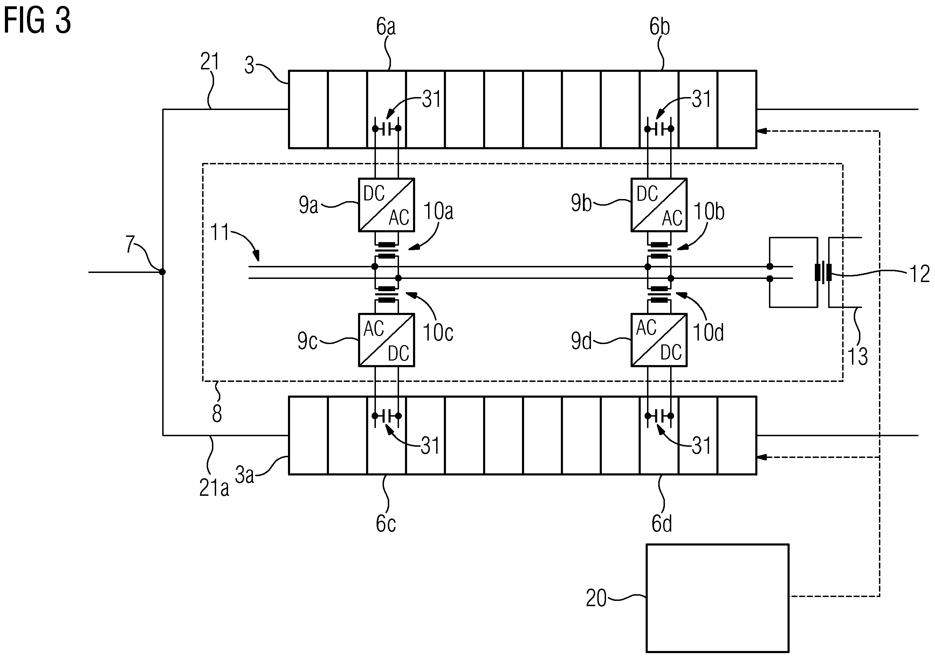

Figur 2 zeigt ein zweites Ausführungsbeispiel einer erfindungsgemäßen Vorrichtung 1, in an einem Knoten 7 eines Wechselspannungsnetzes 2. Zur Übersichtlichkeit sind in den Figuren 1 und 2 gleiche oder gleichartige Bauteile und Elemente mit gleichen Bezugszeichen versehen. Dies gilt im Übrigen auch für die Darstellungen der Figuren 3 bis 5.

In dem Knoten 7 laufen die Phasenleitung 21 und eine Abgangsleitung 21a zusammen. Das Wechselspannungsnetz 2 der Figur 2 ist dreiphasig. Aus Gründen der Übersichtlichkeit ist jedoch nur die erste Phase des Wechselspannungsnetzes 2 grafisch dargestellt.

Die Vorrichtung 1 umfasst eine erste Modulreihenschaltung 3, die seriell in der Phasenleitung 21 angeordnet ist, sowie eine weitere Modulreihenschaltung 3a, die seriell in der Abgangsleitung 21a angeordnet ist. Der Aufbau der Modulreihenschaltungen 3 und 3a entspricht dem Aufbau der Modulreihenschaltung 3 in Figur 1.

Gemäß dem in Figur 2 dargestellten Ausführungsbeispiel umfasst die Vorrichtung 2 ferner eine Energieaustauschvorrichtung 8. Die Energieaustauschvorrichtung 8 ist sowohl mit der ersten Modulreihenschaltung 3 als auch mit der weiteren Modulreihenschaltung 3a verbunden. Mittels der Energieaustauschvorrichtung 8 kann Energie zwischen der Phasenleitung 21 und der Abgangsleitung 21a ausgetauscht werden. Damit kann auch dauerhaft Wirkleistung in die Phasenleitung 21 oder die Abgangsleitung 21a eingespeist werden und damit beispielsweise auch unterschiedliche Spannungsabfälle auf der Phasenleitung 21 bzw. der Abgangsleitung 21a kompensiert werden.

Ein weiteres Ausführungsbeispiel der erfindungsgemäßen Vorrichtung 1 ist in Figur 3 gezeigt. Die erste Modulreihenschaltung 3 ist mit der weiteren Modulreihenschaltung 3a über eine Energieaustauschvorrichtung 8 verbunden. Parallel zu einem Energiespeicher 31 eines ersten Schaltmoduls 6a der Modulreihenschaltung 3 ist ein erster Wechselrichter 9a angeschlossen. Der erste Wechselrichter 9a ist demnach gleichspannungsseitig mit dem Energiespeicher 31 und wechselspannungsseitig über einen ersten Transformator 10a mit einer Sammelschiene 11 verbunden.

Ein zweites Schaltmodul 6b der Modulreihenschaltung 3 ist auf gleichartige Weise über einen zweiten Wechselrichter 9b und zweiten Transformator 10b mit der Sammelschiene 11 verbunden.

Entsprechend sind auch ein erstes Schaltmodul 6c sowie ein zweites Schaltmodul 6d der weiteren Modulreihenschaltung 3a über ihnen zugeordnete Wechselrichter 9c und 9d und Transformatoren 10c bzw. 10d mit der Sammelschiene 11 verbunden. Der Anschluss der Wechselrichter erfolgt jeweils parallel zu den Energiespeichern 31 der Schaltmodule 6c bzw. 6d.

Die Wechselrichter 9a-d können demnach den Energiespeichern 31 Energie entnehmen und diese als Wechselspannung in die Sammelschiene 11 einspeisen. Umgekehrt kann auch Energie von der Sammelschiene 11 in die Energiespeicher 31 übertragen werden. In diesem Fall arbeiten die Wechselrichter 9a-d als Gleichrichter.

Im in Figur 3 gezeigten Ausführungsbeispiel sind lediglich jeweils zwei Schaltmodule 6a-d der Modulreihenschaltungen 3, 3a mit der Sammelschiene 11 verbunden. Solche Verbindungen umfassend Wechselrichter und/oder Transformatoren können jedoch auch einigen anderen oder auch allen Schaltmodulen der Modulreihenschaltungen zugeordnet sein.

Die Sammelschiene 11 ist ferner mit einem zusätzlichen Transformator 12 verbunden, mittels dessen ein weiteres Wechselspannungsnetz 13 mit der Sammelschiene potenzialtrennend verbunden ist. Auf diese Weise kann zwischen dem weiteren Wechselspannungsnetz 13 und dem Wechselspannungsnetz 3 ebenfalls Energie ausgetauscht werden.

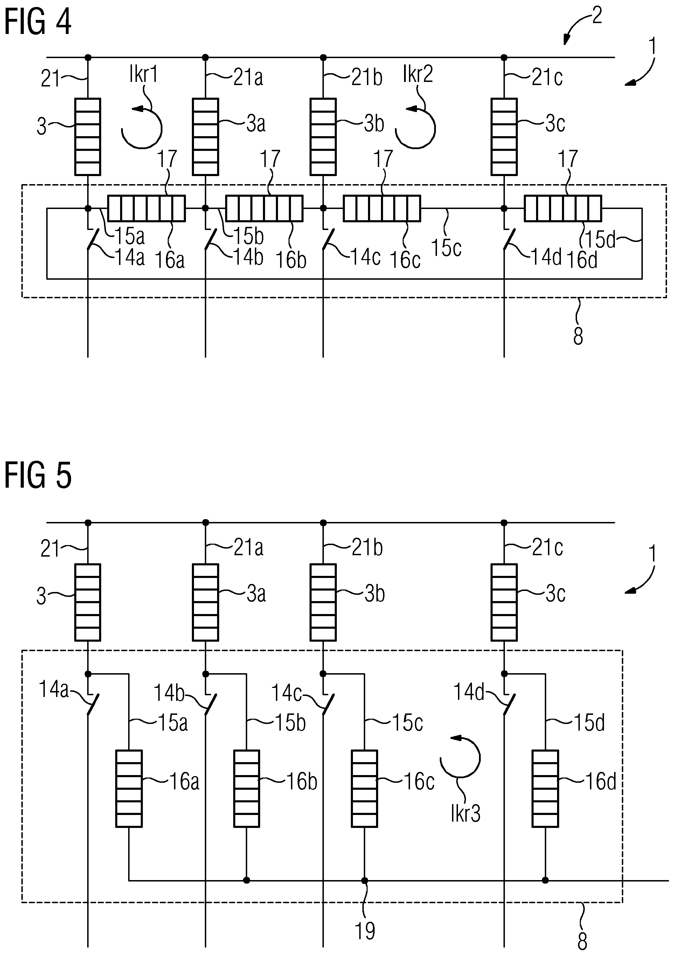

In Figur 4 ist eine Phase eines mehrphasigen Wechselspannungsnetzes 2 mit einem weiteren Ausführungsbeispiel der Vorrichtung 1 dargestellt. Das Wechselspannungsnetz 2 umfasst eine Phasenleitung 21 sowie eine erste, eine zweite und eine dritte zusätzliche Abgangsleitung 21a, 21b bzw. 21c. Das Wechselspannungsnetz 2 umfasst noch weitere Abgangsleitungen, die jedoch in Figur 4 grafisch nicht dargestellt sind.

Die Phasenleitung 21 sowie die Abgangsleitungen 21a-c weisen jeweils eine Modulreihenschaltung 3 bzw. 3a-c, die alle zur Modulreihenschaltung 3 der Figur 1 gleichartig aufgebaut sind. Ferner ist der Phasenleitung 21 und den Abgangsleitungen 21a-c jeweils ein Schaltelement 14a-d zugeordnet, mittels dessen die Leitungen voneinander getrennt werden können.

Die Energieaustauschvorrichtung 8 der Vorrichtung 1 umfasst Energieaustauschzweige 15a-d zwischen der Phasenleitung 21 und den zusätzlichen Abgangsleitungen 21a-c. In den Verbindungszweigen 15a-c ist jeweils eine Reihenschaltung 16a-d von Austauschmodulen 17 angeordnet, wobei die Austauschmodule 17 zu den Schaltmodulen 6 gleichartig aufgebaut sind.

Die Energieaustauschzweige 15a-d bilden eine Ringstruktur. Sie ermöglichen damit einen Energieaustausch zwischen der Phasenleitung 21 und den Abgangsleitungen 21a-c. Mittels der Modulreihenschaltungen 3, 3a-c sowie den Reihenschaltungen 16a-d der Austauschmodule 17 sind Kreisströme erzeugbar, die für den Austausch der Wirkleistung sorgen. In Figur 4 sind aus Gründen der Übersichtlichkeit nur zwei der möglichen Kreisströme grafisch angedeutet: Ein erster Kreisstrom Ikr1, der in der durch die Phasenleitung 21, die erste Abgangsleitung 21a sowie den ersten Energieaustauschzweig 15a gebildeten Masche erzeugbar ist sowie ein zweiter Kreisstrom Ikr2, der in der durch die zweite Abgangsleitung 21b, die dritte Abgangsleitung 21c sowie den dritten Energieaustauschzweig 15c gebildeten Masche erzeugbar ist.

Ein nächstes Ausführungsbeispiel der erfindungsgemäßen Vorrichtung 1 ist in Figur 5 dargestellt. Die Vorrichtung 1 der Figur 5 unterscheidet sich von der Vorrichtung 1 der Figur 4 dadurch, dass die Energieaustauschzweige 15a-d in dem Ausführungsbeispiel der Figur 5 eine Sternstruktur bilden. Alle Energieaustauschzweige 15a-d fallen in einem gemeinsamen Sternpunkt 19 zusammen. Auch hier sind jedoch Kreisströme erzeugbar, die für den Energieaustausch sorgen. Beispielsweise kann ein Kreisstrom Ikr3 in der durch die zweite Abgangsleitung 21b, den dritten Energieaustauschzweig 15c, den vierten Energieaustauschzweig 15d und die dritte Abgangsleitung 21c gebildeten Masche erzeugt werden.

Figur 6 zeigt den Aufbau der Schaltmodule 6 der erfindungsgemäßen Vorrichtungen 1 der Figuren 1 bis 5. Die Schaltmodule 6a-d der Figur 3 sind hierzu gleichartig ausgebildet.

Das Schaltmodul 6 ist als Vollbrückenschaltung ausgebildet. Durch eine entsprechende Ansteuerung der einzelnen Leistungshalbleiter 301 kann dem Leistungskondensator 31 Energie zugeführt oder entnommen werden. Auf diese Weise kann an den Anschlüssen bzw. Polen 32 und 33 des Schaltmoduls 6 die am Energiespeicher abfallende Spannung, eine entgegengesetzt gerichtete Spannung oder auch eine Spannung null eingestellt werden. Bezüglich weiterer Details des Aufbaus und der Funktionsweise des Umrichters 3 und des Schaltmoduls 6 wird hiermit auf die zuvor genannte Druckschrift WO 2015/003737 A1 verwiesen.

## Patentansprüche

1. Vorrichtung (1) zum Steuern eines Lastflusses in einem Wechselspannungsnetz (2), wobei die Vorrichtung umfasst:
- eine seriell in eine Phasenleitung (21) des Wechselspannungsnetzes (2) einfügbaren Modulreihenschaltung (3) zweipoliger Schaltmodule (6), wobei jedes Schaltmodul einen Energiespeicher (31) sowie ansteuerbare, ein- und abschaltbare Leistungshalbleiter (301) aufweist und derart ansteuerbar ist, dass an dessen Polen (32,33) eine Schaltmodulspannung erzeugbar ist, die einer positiven oder negativen Energiespeicherspannung oder einer Spannung mit dem Wert null entspricht, und
- einer Steuereinrichtung (20) zum Ansteuern der Schaltmodule (6), die dazu eingerichtet ist, die Schaltmodule (6) derart anzusteuern, dass an der Modulreihenschaltung (3) eine periodische Längsspannung erzeugbar ist;
**dadurch gekennzeichnet, dass** die Vorrichtung (1) ferner umfasst
- eine weitere Modulreihenschaltung (3a) der zweipoligen Schaltmodule (6), die in eine mit der Phasenleitung (21) verbundene Abgangsleitung (21a) des Wechselspannungsnetzes (2) einfügbar und mittels der eine Längsspannung erzeugbar ist, sowie
- eine mit der Modulreihenschaltung (3) und mit der weiteren Modulreihenschaltung (3a) verbindbare Energieaustauschvorrichtung (8), die zum Austausch elektrischer Energie zwischen der Phasenleitung (3) und der Abgangsleitung (3a) eingerichtet ist.

2. Vorrichtung (1) nach Anspruch 1 die Energieaustauschvorrichtung (8)
- einen ersten Wechselrichter (9a) umfasst, der gleichspannungsseitig mit dem Energiespeicher (31) eines der Schaltmodule (6) der Modulreihenschaltung (3) und wechselspannungsseitig mit einer Sammelschiene (11) verbunden ist, und
- einen zweiten Wechselrichter (9c)umfasst, der gleichspannungsseitig mit dem Energiespeicher (31) eines der Schaltmodule (6) der weiteren Modulreihenschaltung (3a) und wechselspannungsseitig mit der Sammelschiene (11) verbunden ist.

3. Vorrichtung (1) nach Anspruch 2, wobei der erste und der zweite Wechselrichter (9a, 9c) jeweils über einen Transformator (10a, 10c) mit der Sammelschiene (11) verbunden sind.

4. Vorrichtung (1) nach einem der Ansprüche 2 oder 3, wobei die Sammelschiene (11) über einen zusätzlichen Transformator (12) mit einem weiteren Wechselspannungsnetz (13) verbunden ist.

5. Vorrichtung (1) nach Anspruch 1, wobei die Energieaustauschvorrichtung (8) wenigstens einen Energieaustauschzweig (15a) umfasst, in dem eine Reihenschaltung (16a) zweipoliger Austauschmodule (17) angeordnet ist, wobei jedes Austauschmodul (17) einen Energiespeicher (31) sowie ansteuerbare, ein- und abschaltbare Leistungshalbleiter (301) aufweist und derart ansteuerbar ist, dass an dessen Polen eine Austauschmodulspannung erzeugbar ist, die einer positiven oder negativen Energiespeicherspannung oder einer Spannung mit dem Wert null entspricht.

6. Vorrichtung (1) nach einem der Ansprüche 1 bis 5, wobei eine Mehrzahl zusätzlicher Modulreihenschaltungen (3a-c) der zweipoligen Schaltmodule (6) vorgesehen ist, die jeweils in ihnen zugeordnete, mit der Phasenleitung (21) verbundene zusätzliche Abgangsleitungen (21a-c) einfügbar sind, wobei die Energieaustauschvorrichtung (8) mit den zusätzlichen Modulreihenschaltungen (3a-c) verbunden und zum Energieaustausch zwischen der Phasenleitung (21), der Abgangsleitung und den zusätzlichen Abgangsleitungen (21a-c) eingerichtet ist.

7. Vorrichtung (1) nach Anspruch 6, wobei die Energieaustauschvorrichtung (8) Energieaustauschzweige (15a-d) zwischen der Phasenleitung und den Abgangsleitungen umfasst, die eine Ringstruktur bilden.

8. Vorrichtung (1) nach Anspruch 6, wobei die Energieaustauschvorrichtung (8) Energieaustauschzweige (15a-d) zwischen der Phasenleitung und den Abgangsleitungen umfasst, die eine Sternstruktur bilden.

9. Vorrichtung (1) nach einem der vorangehenden Ansprüche, wobei die Vorrichtung (1) zum Steuern des Lastflusses in einem mehrphasigen Wechselspannungsnetz (2) eingerichtet ist.

10. Vorrichtung (1) nach einem der vorangehenden Ansprüche, wobei die Schaltmodule (6) als Vollbrückenschaltungen ausgebildet sind.

11. Vorrichtung (1) nach einem der vorangehenden Ansprüche, wobei die Schaltmodule (6) jeweils als zwei entgegengesetzt gerichtete Halbbrückenschaltungen ausgebildet sind.

12. Verfahren zur Steuerung eines Lastflusses in einem Wechselspannungsnetz (2), bei dem mittels einer Steuereinrichtung (20) zweipolige Schaltmodule (6) einer Modulreihenschaltung (3), die in eine Phasenleitung (21) des Wechselspannungsnetzes (2) eingefügt ist, wobei jedes Schaltmodul (2) einen Energiespeicher (31) sowie ansteuerbare, ein- und abschaltbare Leistungshalbleiter (301) aufweist und derart ansteuerbar ist, dass an dessen Polen (32,33) eine Schaltmodulspannung erzeugbar ist, die einer positiven oder negativen Energiespeicherspannung oder einer Spannung mit dem Wert null entspricht, derart angesteuert werden, dass an der Modulreihenschaltung (3) eine periodische Längsspannung erzeugt wird, sowie, dass bei dem Verfahren mittels der Steuereinrichtung (20) Schaltmodule einer weiteren Modulreihenschaltung (3a), die in eine Abgangsleitung (21a) des Wechselspannungsnetzes (2) eingefügt ist, derart angesteuert werden, dass an der weiteren Modulreihenschaltung (21a) eine Längsspannung erzeugt wird, wobei mittels einer mit den beiden Modulreihenschaltungen (21,21a) verbundenen Energieaustauschvorrichtung (8) elektrische Energie zwischen der Phasenleitung (21) und der Abgangsleitung (21a) ausgetauscht wird.

## Claims

1. Device (1) for controlling a load flow in an alternating-voltage network (2), wherein the device includes:
- a modular series connection (3) of bipolar switching modules (6), which can be serially inserted into a phase line (21) of the alternating-voltage network (2), wherein each switching module exhibits an energy-storage device (31) and also power semiconductors (301) that are capable of being driven and capable of being switched on and off, and is capable of being driven in such a manner that at its poles (32, 33) a switching-module voltage can be generated that corresponds to a positive or negative energy-storage voltage or to a voltage having the value zero, and
- a control device (20) for driving the switching modules (6), which has been set up to drive the switching modules (6) in such a manner that a periodic longitudinal voltage can be generated at the modular series connection (3);
**characterized in that** the device (1) further includes
- a further modular series connection (3a) of the bipolar switching modules (6), which can be inserted into an outgoing line (21a) of the alternating-voltage network (2) which is connected to the phase line (21), and by means of which a longitudinal voltage can be generated, and also
- an energy-exchange device (8) which can be connected to the modular series connection (3) and to the further modular series connection (3a) and which has been set up for the exchange of electrical energy between the phase line (3) and the outgoing line (3a).

2. Device (1) according to Claim 1, wherein the energy-exchange device (8)
- includes a first inverter (9a) which is connected on the direct-voltage side to the energy-storage device (31) of one of the switching modules (6) of the modular series connection (3), and on the alternating-voltage side to a busbar (11), and
- includes a second inverter (9c) which is connected on the direct-voltage side to the energy-storage device (31) of one of the switching modules (6) of the further modular series connection (3a), and on the alternating-voltage side to the busbar (11).

3. Device (1) according to Claim 2, wherein the first and the second inverter (9a, 9c) are respectively connected to the busbar (11) via a transformer (10a, 10c).

4. Device (1) according to either of Claims 2 and 3, wherein the busbar (11) is connected to a further alternating-voltage network (13) via an additional transformer (12).

5. Device (1) according to Claim 1, wherein the energy-exchange device (8) includes at least one energy-exchange branch (15a) in which a series connection (16a) of bipolar exchange modules (17) is arranged, wherein each exchange module (17) exhibits an energy-storage device (31) and also power semiconductors (301) that are capable of being driven and capable of being switched on and off, and is capable of being driven in such a manner that at its poles an exchange-module voltage can be generated that corresponds to a positive or negative energy-storage voltage or to a voltage having the value zero.

6. Device (1) according to one of Claims 1 to 5, wherein a plurality of additional modular series connections (3a-c) of the bipolar switching modules (6) are provided which can be respectively inserted into additional outgoing lines (21a-c) assigned to them and connected to the phase line (21), wherein the energy-exchange device (8) is connected to the additional modular series connections (3a-c) and has been set up for the exchange of energy between the phase line (21), the outgoing line and the additional outgoing lines (21a-c).

7. Device (1) according to Claim 6, wherein the energy-exchange device (8) includes energy-exchange branches (15a-d) between the phase line and the outgoing lines, which form a ring structure.

8. Device (1) according to Claim 6, wherein the energy-exchange device (8) includes energy-exchange branches (15a-d) between the phase line and the outgoing lines, which form a star structure.

9. Device (1) according to one of the preceding claims, wherein the device (1) has been set up for controlling the load flow in a polyphase alternating-voltage network (2).

10. Device (1) according to one of the preceding claims, wherein the switching modules (6) take the form of full-bridge circuits.

11. Device (1) according to one of the preceding claims, wherein the switching modules (6) each take the form of two oppositely-directed half-bridge circuits.

12. Method for controlling a load flow in an alternating-voltage network (2), in which by means of a control device (20) bipolar switching modules (6) of a modular series connection (3) which has been inserted into a phase line (21) of the alternating-voltage network (2), wherein each switching module (2) exhibits an energy-storage device (31) and also power semiconductors (301) that are capable of being driven and capable of being switched on and off, and is capable of being driven in such a manner that at its poles (32, 33) a switching-module voltage can be generated that corresponds to a positive or negative energy-storage voltage or to a voltage having the value zero, are driven in such a manner that a periodic longitudinal voltage is generated at the modular series connection (3), and also that, in the method, switching modules of a further modular series connection (3a), which has been inserted into an outgoing line (21a) of the alternating-voltage network (2), are driven by means of the control device (20) in such a manner that a longitudinal voltage is generated at the further modular series connection (21a), wherein electrical energy is exchanged between the phase line (21) and the outgoing line (21a) by means of an energy-exchange device (8) connected to the two modular series connections (21, 21a) .

## Revendications

1. Installation (1) de commande d'un flux de charge dans un réseau (2) à tension alternative, l'installation comprenant :
- un circuit (3) série de modules (6) de coupure bipolaires, pouvant être inséré en série dans un conduit (21) de phase du réseau (2) à tension alternative, chaque module de coupure ayant un accumulateur (31) d'énergie, ainsi qu'un semi-conducteur (301) de puissance commandable, en pouvant être mis en circuit et hors circuit, et pouvant être commandé de manière à pouvoir produire à ses pôles (32, 33) une tension de module de coupure, qui correspond à une tension positive ou négative de l'accumulateur d'énergie ou à une tension ayant la valeur zéro, et
- un dispositif (20) de commande pour commander les modules (6) de coupure, qui est agencé pour commander les modules (6) de coupure de manière à pouvoir produire sur le circuit (3) série de modules une composante longitudinale périodique de tension,
**caractérisée en ce que** l'installation (1) comprend en outre :
- un autre circuit (3) série des modules (6) de coupure bipolaires, qui peut être inséré dans une ligne (21a) de sortie, reliée à la ligne (21) de phase, du réseau (2) à tension alternative et au moyen duquel une composante longitudinale de tension peut être produite, ainsi que
- un système (8) d'échange d'énergie, qui peut être relié à l'autre circuit (3) série de modules et qui est agencé pour l'échange d'énergie électrique entre la ligne (3) de phase et la ligne (3a) de sortie.

2. Installation (1) suivant la revendication 1, dans laquelle le système (8) d'échange d'énergie
- comprend un premier onduleur (9a), qui est connecté du côté de la tension continue à l'accumulateur (31) d'énergie de l'un des modules (6) de coupure du circuit (3) série de modules et du côté de la tension alternative à une barre (11) collectrice, et
- comprend un deuxième onduleur (9c), qui est connecté du côté de la tension continue à l'accumulateur (31) d'énergie de l'un des modules (6) de coupure de l'autre circuit (3) série de modules et du côté de la tension alternative à la barre (11) collectrice.

3. Installation (1) suivant la revendication 2, dans laquelle le premier et le deuxième onduleur (9a, 9c) sont connectés chacun à la barre (11) collectrice par un transformateur (10a, 10c).

4. Installation (1) suivant l'une des revendications 2 ou 3, dans laquelle la barre (11) collectrice est reliée à un autre réseau (3) à tension alternative par un transformateur (12) supplémentaire.

5. Installation (1) suivant la revendication 1, dans laquelle le système (8) d'échange d'énergie comprend au moins une branche (15a) d'échange d'énergie, dans laquelle est monté un circuit (16a) série de modules (17) d'échange bipolaires, chaque module (17) d'échange ayant un accumulateur (31) d'énergie ainsi qu'un semi-conducteur (301) de puissance pouvant être commandé, en étant mis en circuit hors circuit, et pouvant être commandé de manière à pouvoir produire à ses pôles une tension de module d'échange, qui correspond à une tension positive ou négative de l'accumulateur d'énergie ou à une tension ayant la valeur zéro.

6. Installation (1) suivant l'une des revendications 1 à 5, dans laquelle il est prévu une pluralité de circuits (3a-c) série supplémentaires de modules (6) de coupure bipolaires, qui peuvent être insérés respectivement dans des lignes (21a-c) de sortie supplémentaires, qui leur sont associées et qui sont reliées à la ligne (21) de phase, le système (8) d'échange d'énergie étant connecté aux circuits (3a-c) série de modules supplémentaires et étant agencé pour l'échange d'énergie entre la ligne (21) de phase, la ligne de sortie et les lignes (21a-c) de sortie supplémentaires.

7. Installation (1) suivant la revendication 6, dans laquelle le système (8) d'échange d'énergie comprend des branches (15ad) d'échange d'énergie entre la ligne de phase et les lignes de sortie, qui forment une structure en anneau.

8. Installation (1) suivant la revendication 6, dans laquelle le système (8) d'échange d'énergie comprend des branches (15ad) d'échange d'énergie entre la ligne de phase et les lignes de sortie, qui forment une structure en étoile.

9. Installation (1) suivant l'une des revendications précédentes, dans laquelle l'installation (1) de commande du flux de charge est montée dans un réseau (2) à tension alternative polyphasé.

10. Installation (1) suivant l'une des revendications précédentes, dans laquelle les modules (6) de coupure sont constitués sous la forme de circuits à pont complet.

11. Installation (1) suivant l'une des revendications précédentes, dans laquelle les modules (6) de coupure sont constitués chacun sous la forme de deux circuits à demi-pont orientés en sens contraire.

12. Procédé de commande d'un flux de charge dans un réseau (2) à tension alternative, dans lequel, au moyen d'un dispositif (20) de commande, on commande des modules (6) de coupure bipolaires d'un circuit (3) série de modules, qui est inséré dans une ligne (21) de phase du réseau (2) à tension alternative, chaque module (2) de coupure ayant un accumulateur (31) d'énergie, ainsi qu'un semi-conducteur (301) de puissance pouvant être commandé, en étant mis en circuit et hors de circuit, et pouvant être commandé de manière à pouvoir produire à ses pôles (32, 33) une tension de module de coupure, qui correspond à une tension positive ou négative de l'accumulateur d'énergie ou à une tension zéro de manière à produire une composante longitudinale périodique de tension sur le circuit (3) série de module
ainsi que, en ce que dans le procédé, au moyen du dispositif (20) de commande, on commande des modules de coupure d'un autre circuit (3) série de modules, qui est inséré dans une ligne (21a) de sortie du réseau (2) à tension alternative, de manière à produire une composante longitudinale de tension sur l'autre circuit (21a) série de modules, dans lequel au moyen d'un système (8) d'échange d'énergie, connecté aux deux circuits (21, 21a) série de modules, de l'énergie électrique est échangée entre la ligne (21) de phase et la ligne (21a) de sortie.
